# EUROPEAN PATENT APPLICATION

(11) **EP 4 671 403 A1**
(43) Date of publication of application: **31.12.2025**
(21) Application number: 23929678.3
(22) Date of filing: 14.06.2023
(51) Int. Cl.: C22C 38/04, C22C 38/02, C22C 38/12, C22C 38/06, C22C 38/14, C22C 38/08, C22C 33/04, C21C 7/10, C21C 7/00, C21D 8/02

(54) **LOW-TEMPERATURE STRUCTURAL STEEL FOR TMCP-STATE LOW-COST HIGH HEAT INPUT WELDING, AND MANUFACTURING METHOD**

(30) Priority: 30.03.2023 CN 202310326306
(71) Applicant: Nanjing Iron & Steel Co., Ltd., Nanjing, Jiangsu 210035 (CN)
(72) Inventor: HUO, Songbo, Nanjing, Jiangsu 210035 (CN); LIANG, Hai, Nanjing, Jiangsu 210035 (CN); HU, Qilong, Nanjing, Jiangsu 210035 (CN); CAO, Konggang, Nanjing, Jiangsu 210035 (CN); JIN, Xing, Nanjing, Jiangsu 210035 (CN); HONG, Jun, Nanjing, Jiangsu 210035 (CN); WU, Junping, Nanjing, Jiangsu 210035 (CN); QIAO, Mingliang, Nanjing, Jiangsu 210035 (CN); ZHAO, Jinbin, Nanjing, Jiangsu 210035 (CN); LIU, Bin, Nanjing, Jiangsu 210035 (CN); XU, Feng, Nanjing, Jiangsu 210035 (CN); FANG, Kaiming, Nanjing, Jiangsu 210035 (CN); LIANG, Jingyun, Nanjing, Jiangsu 210035 (CN); WANG, Xu, Nanjing, Jiangsu 210035 (CN); BAI, Xiaoke, Nanjing, Jiangsu 210035 (CN); LI, Meibao, Nanjing, Jiangsu 210035 (CN); CHENG, Shanghua, Nanjing, Jiangsu 210035 (CN); NI, Weiying, Nanjing, Jiangsu 210035 (CN)
(74) Representative: Gong, Jinping
(86) International application number: PCT/CN2023/100205
(87) International publication number: WO 2024/198101

(57) **Abstract**

Provided are TMCP (Thermo-Mechanical Control Process)-state low-cost low-temperature structural steel for high-heat-input welding and a manufacturing method, relating to the technical field of steel production. By adopting a low-carbon niobium-free composition design and a smelting process based on oxide metallurgy technology, fine-sized, dispersed and hybridized oxide particles are formed in steel. Fine and dispersed inclusion particles with high thermal stability are used to pin an austenite grain boundary of a welding heat-affected zone under a high heat input condition to refine the austenite grains. In addition, oxides are used as nucleation points of intragranular acicular ferrite (IAF), so that an IAF structure with good strength and toughness is formed in the welding heat-affected zone, and then the toughness of the welding heat-affected zone with high heat input is significantly improved. High-strength ship plate steel is produced using TMCP technology combined with high-temperature, low-speed and heavy-reduction rolling, no heat treatment is required, the cost is reduced, and a stable production process is ensured.

## Description

### TECHNICAL FIELD

The present disclosure relates to the technical field of steel production, and in particular to TMCP (thermo-mechanical control process)-state low-cost low-temperature structural steel for high-heat-input welding and a manufacturing method.

### BACKGROUND

Steel for high-heat-input welding is widely used, for example, in strategic petroleum reserve, shipbuilding and low-temperature structure industries, and the welding efficiency is improved by 2-4 times by using high heat input. When production is unavailable in China, import from abroad becomes the only option, but it is expensive. A high-heat-input welding method is the most practical way to improve the welding construction efficiency and reduce the cost. *Technology Roadmap on Chinese steel industry 2006 to 2020* puts forward that high heat input welding steel is one of the key development goals of iron and steel industry in China, which has broad market prospects.

When a welding heat input is more than 50 kJ/cm, it is called high-heat-input welding. When the welding heat input of a conventional steel plate is more than 50 kJ/cm, due to the excessive coarsening of a microstructure in the welding heat-affected zone, the mechanical properties of the welded joint deteriorate significantly, even falling below the standard requirements of a base metal plate. Research and develop the steel for high-heat-input energy welding is an effective way to solve the deterioration of low-temperature toughness in the welding heat-affected zone of high-heat-input welding.

The existing patents of steel plates for high-heat-input welding, such as CN1946862A, CN1338528A, CN101050502A and CN101050504A, all contain an alloying element Nb, with a main objective of improving the strength and toughness of the base metal plate, and the cost is high.

### SUMMARY

For the foregoing technical problem, the present disclosure overcomes shortcomings in the prior art and provides TMCP-state low-cost low-temperature structural steel for high-heat-input welding, where no Nb is added into chemical composition of steel, and the steel includes the following chemical composition in weight percentage: 0.05%-0.12% of C, 0.15%-0.30% of Si, 1.20%-1.60% of Mn, less than or equal to 0.015% of P, less than or equal to 0.0030% of S, 0.030%-0.040% of V, 0.005%-0.050% of Alt, 0.005%-0.030% of Ti, 0.0005%-0.0040% of Ca, 0.05%-0.40% of Ni, 0.0005%-0.0040% of Mg, 0.32%-0.41% of Ceq, and the rest of Fe and inevitable impurities.

The technical solution further limited by the present disclosure is as follows:

According to the foregoing TMCP-state low-cost low-temperature structural steel for high-heat-input welding, the steel includes the following chemical composition in weight percentage: 0.06%-0.10% of C, 0.16%-0.27% of Si, 1.23%-1.45% of Mn, less than or equal to 0.015% of P, less than or equal to 0.0030% of S, 0.033%-0.037% of V, 0.010%-0.044% of Alt, 0.029%-0.030% of Ti, 0.0015%-0.0032% of Ca, 0.24%-0.27% of Ni, 0.0011%-0.0014% of Mg, 0.35%-0.40% of Ceq, and the rest of Fe and inevitable impurities.

According to the foregoing TMCP-state low-cost low-temperature structural steel for high-heat-input welding, the steel includes the following chemical composition in weight percentage: 0.07%-0.08% of C, 0.25%-0.28% of Si, 1.47%-1.56% of Mn, less than or equal to 0.015% of P, less than or equal to 0.0030% of S, 0.036%-0.038% of V, 0.044%-0.050% of Alt, 0.017%-0.020% of Ti, 0.0026%-0.0033% of Ca, 0.22%-0.25% of Ni, 0.0032%-0.0036% of Mg, 0.36%-0.40% of Ceq, and the rest of Fe and inevitable impurities.

Another objective of the present disclosure is to provide a manufacturing method for a TMCP-state low-cost low-temperature structural steel for high-heat-input welding, including the following processes: hot metal desulfurization pretreatment, converter smelting, LF (ladle furnace) refining, RH (Ruhrstahl-Heraeus) refining, continuous casting, slab inspection and determination, slab acceptance, continuous cast slab heating, descaling, rolling, cooling, flaw detection, cutting and sampling, logo spray marking, and warehousing, where
after hot metal desulfurization pretreatment, S is controlled to be less than or equal to 0.005%, P is controlled to be less than or equal to 0.013% by converter smelting, LF refining is carried out for inclusion control and alloy composition adjustment, an oxygen content in an LF furnace is adjusted to an appropriate level using ferrosilicon (Si), and ferrotitanium (Ti), an aluminum (Al) wire, a calcium (Ca) wire and a magnesium (Mg) alloy wire are added strictly in a specified sequence with a time interval of not exceeding 5 min; vacuum treatment of RH refining is kept for more than or equal to 30 min under the condition of high vacuum of less than or equal to 5.0 mbar; a tundish temperature is controlled within a range of 8-22°C above a liquid phase line during continuous casting; and continuous cast slabs are stacked for slow cooling over 48 hours;
a heating temperature of the continuous cast slab is 1150-1250°C, a heating time is 300-400 min, and a tap temperature is 1130-1230°C; rolling employs two-stage rolling in an austenite recrystallization zone and a non-recrystallization zone; during rough rolling, large pass reduction is adopted to refine austenite grains with a pass reduction of more than or equal to 30 mm and a rolling start temperature of rough rolling of higher than or equal to 1050°C, and an intermediate billet with a thickness of more than or equal to 2.0 times a finished product thickness is produced by rough rolling, wherein a final rolling temperature of the rough rolling is controlled at 900-1050°C, a rolling start temperature of finish rolling is 780-880°C, and the reduction per pass is 10%-15%; and laminar flow cooling for controlled cooling after rolling, with a self-tempering temperature in a range of 600-700°C, followed by air cooling.

According to the foregoing TMCP-state low-cost low-temperature structural steel for high-heat-input welding, a 10-80 mm-thick S355ML-grade steel is produced.

According to the foregoing TMCP-state low-cost low-temperature structural steel for high-heat-input welding, a steel plate has a yield strength of more than or equal to 355 MPa, and a tensile strength of more than or equal to 470-630 MPa, and a suitable weld heat input of 50-250 kJ/cm; under a high-heat-input welding condition, average impact energy of an HAZ (heat-affected zone) of the steel plate at -50°C is above 150 J, and no heat treatment is required when the average impact energy of the HAZ of the steel plate at -50°C is above 27 J.

The present disclosure has beneficial effects as follows:
(1) Through a smelting process based on oxide metallurgy technology, fine-sized, dispersed and hybridized oxide particles are formed in steel. Fine and dispersed inclusion particles with high thermal stability are used to pin an austenite grain boundary of a welding heat-affected zone under a high heat input condition to refine the austenite grains. In addition, these oxides are used as nucleation points of intragranular acicular ferrite (IAF), so that an IAF structure with good strength and toughness is formed in the welding heat-affected zone, and then the toughness of the welding heat-affected zone with high heat input is significantly improved.
(2) In the present disclosure, V and Ni microalloying elements are adopted to improve the strength and toughness of the steel, and the strength of the product can reach above 510 MPa on the premise of ensuring high-heat-input welding, so that the production cycle is short, the production rhythm is fast, and great economic significance is achieved.
(3) The basic idea of a composition design of the steel for high-heat-input welding in the present disclosure is that there is no need to add niobium to ensure weldability, the content of manganese and microalloying elements is increased to improve strength, and the content of impurity elements such as phosphorus and sulfur is controlled, so that the grain is effectively refined, the toughness is improved, and the atmospheric corrosion resistance of the steel is improved. Fine and dispersed inclusions are formed by using an oxide metallurgy method, austenite growth is inhibited and microstructure transformation is controlled during welding, so that the toughness of a coarse grain zone of the steel for high-heat-input welding is maintained at a good level.

### BRIEF DESCRIPTION OF THE DRAWINGS

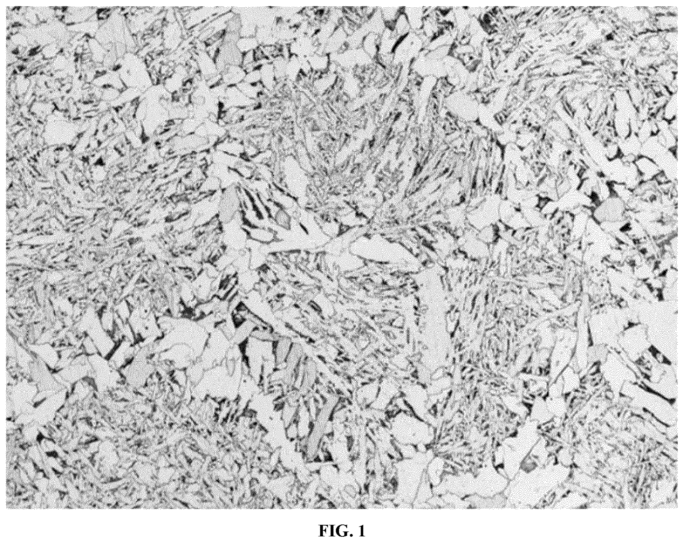

FIG. 1 is a metallographic picture of a welding HAZ coarse grain zone of 80 mm-thick TMCP-state low-cost low-temperature structural steel S355ML for high-heat-input welding according to an embodiment.

### DETAILED DESCRIPTION OF THE EMBODIMENTS

A chemical composition design principle is as follows.

Carbon is the most important element in steel, and is also one of the cheapest elements. Carbon is a strong interstitial solution element. The addition of carbon to steel exerts a remarkable interstitial solid solution strengthening effect on the steel, thereby enhancing the strength of high-strength low-alloy steel, with carbon being the most significant contributor to the strength of the steel. Carbon combines with microalloying elements (Nb, Ti, V, and the like) in steel to form carbides, especially fine and dispersed carbide inclusions in austenite, which can contribute to grain refinement and precipitation strengthening, thereby enhancing the hardness and strength of the steel. When a carbon content in the steel increases, the yield strength and the tensile strength increase, but the plasticity and impact toughness decrease, and the weldability of the steel is also damaged. To adapt to high-heat-input welding and improve the toughness of steel, the carbon content of the low-alloy high-strength steel is appropriately reduced to improve low-temperature impact toughness and weldability of the steel plate. The carbon content of low-alloy structural steel used for welding is generally less than 0.20%, and the carbon content is reduced to below 0.10%, or even lower. The use of a low-carbon design in the low-alloy high-strength steel will inevitably lead to strength loss. To ensure that the steel for high-heat-input welding still has high strength under the premise of low carbon, it is necessary to adopt reasonable microalloying treatment to improve the strength by adding the microalloying elements.

Manganese is a weak carbide-forming element, with only a small portion dissolving in cementite, the majority dissolves in ferrite and austenite, thereby enhancing hardness and strength of the ferrite and austenite through solid solution strengthening. Manganese content is often increased to compensate for partial strength loss resulting from reduced carbon content. Manganese can significantly reduce a transformation temperature, strongly reduce an initial transformation temperature of grain boundary ferrite, and promote the formation of acicular ferrite. Manganese is also a good deoxidizer and desulfurizer, which is often added with silicon and titanium for composite deoxidization to form composite inclusions with high sulfur capacity, thereby effectively inducing the nucleation of intragranular acicular ferrite. Manganese and sulfur form MnS with a high melting point, which can prevent thermal brittleness caused by the formation of FeS. In addition, manganese can increase the tendency of grain coarsening, temper brittleness sensitivity and overheating sensitivity of the steel.

Silicon can be dissolved in the ferrite and austenite to improve the hardness and strength of the steel and make up for partial strength loss caused by carbon content reduction. Silicon has a good deoxidizing effect in molten steel and is a good deoxidizer. When aluminum is used for deoxidation, a certain amount of silicon can be added to significantly improve the deoxidizing ability of aluminum. However, excessive silicon content can promote the nucleation of grain boundary-like ferrite, which inhibits the formation of acicular ferrite, increases the content of MA (Martensite-Retained Austenite) constituents, and reduce the plasticity and toughness of the steel, thereby reducing the weldability of the steel. Therefore, the composition of the steel for high-heat-input welding should be low-silicified to promote the formation of fine bainite and ferrite structures.

Aluminum, as a strong oxidant, has high stability and can generate fine oxides dispersed in steel. These oxides can be used as nucleation centers of inclusions to induce the adhesion and precipitation of nitrides, carbides and sulfides. In addition, aluminum is also a strong nitrogen fixing agent, which can form nano-scale aluminum nitride precipitates to improve the thermal stability of the steel and inhibit the austenite grain coarsening during reheating. However, the pinning effect of aluminum nitride on an austenite grain boundary is only limited to 1100°C. When the austenite decomposes, composite inclusions of the aluminum can effectively induce the nucleation of acicular ferrite, refine grains and improve toughness. The addition of a proper amount of aluminum to steel can reduce the number of M-A islands in the heat-affected zone, reducing an average length of the steel. In addition, the number of retained austenite in M-A is increased, thereby improving the toughness of the heat-affected zone. When the aluminum content is high, oxide inclusions of aluminum tend to agglomerate and form coarse particles, which are easy to form crack sources. In addition, an increase of an aluminum concentration can form unfavorable microstructure in steel, such as promoting the formation of side lath ferrite structure in steel and reducing the toughness of steel.

Niobium is a typical precipitation strengthening element, which has strong affinity with carbon and nitrogen. At room temperature, most of niobium in steel exists in the form of carbide, nitride and carbonitride, and a proper amount of niobium element can form fine and dispersed second-phase particles, which has excellent fine grain strengthening and precipitation strengthening effects during rolling. These fine second-phase particles can also pin austenite grains in the welding process to inhibit grain coarsening. A part of niobium can be dissolved in an austenite matrix and segregated at the austenite grain boundary, and a solute drag effect can inhibit the migration of the austenite grain boundary, thereby restricting grain growth, refining the grains and enhancing both strength and toughness. In addition. niobium has a significant effect on the microstructure of the heat-affected zone and the morphological characteristics of M-A constituents, but niobium can lead to the coarsening of the second-phase particles, resulting in a loss of their effectiveness in inhibiting grain growth, and can inhibit ferrite transformation, promote the formation of granular bainite, resulting in serious deterioration of the toughness.

Vanadium has strong affinity with carbon, nitrogen and other elements, and mainly exists in the form of carbide and nitride in steel, which can be improve the strength of the steel by precipitation. VN precipitated from the austenite can inhibit the growth of austenite grains, while VN precipitated from a ferrite zone can increase a nucleation core of intragranular ferrite, which together promote grain refinement and significantly improve the weldability of the low-carbon low-alloy steel. However, the carbonitride of vanadium cannot be fully precipitated during high-heat-input welding.

Titanium has strong affinity with oxygen, nitrogen and carbon, and is a good deoxidizer and an effective element for fixing nitrogen and carbon. Titanium oxide is considered as the most effective nucleation inclusion in the steel, which can effectively promote the nucleation of the acicular ferrite.

A novel technology of magnesium deoxidation and magnesium-titanium synergistic inclusion control solves the problem that under a conventional cooling rate, the coarsening of TiN particles in medium-carbon micro-alloyed steel can significantly increase the content of titanium nitride in the steel.

Nickel is an important element for improving low-temperature toughness of the steel, which is a pure solid solution element in the steel, can strengthen a ferrite matrix, and can obviously reduce a ductile-brittle transition temperature. When in a liquid or solid state, nickel can dissolve with iron at any ratio to inhibit the formation of coarse proeutectoid ferrite, refine ferrite grains and improve the low-temperature toughness of the steel. Nickel is an element for expanding an austenite phase zone, which can affect a diffusion rate of carbon and alloy elements, prevent pearlite formation, improve hardenability, and slow down the tendency of hardening and cracking during welding.

Sulfur is a harmful element in steel, and exists in the form of FeS with a low melting point, which easily leads to hot embrittlement of steel, resulting in cracks. S in steel is easy to combine with Mn to form layered segregation of MnS inclusions, which leads to dramatic reduction in both strength and plasticity in a through-thickness direction, resulting in lamellar tearing, which severely endangers the performance of the steel. In addition, under certain conditions, MnS in steel, together with VN and TiN, can inhibit austenite grain growth and induce the nucleation of the intragranular ferrite, which effectively refines the grains and improves the toughness.

Phosphorus is an impurity element, with the biggest harm of serious segregation, which significantly reduces the plasticity and toughness of the steel, and also has a bad effect on weldability. When phosphorus acts with copper in the steel, the atmospheric corrosion resistance of the steel can be improved.

In Embodiments 1-3, 80 mm-thick TMCP-state low-cost low-temperature structural steel for high-heat-input welding is provided. The manufacturing method adopts a low-carbon niobium-free oxide metallurgical process, trace elements Ni and V are added, and a controlled rolling and controlled cooling technology is adopted.

**Table 1 Main chemical composition of Embodiment (wt%)**

| Embodiment | C | Si | Mn | P | S | Alt | V | Ti | Ni | Ceq |
|---|---|---|---|---|---|---|---|---|---|---|
| Embodiment 1 | 0.08 | 0.24 | 1.52 | 0.008 | 0.0010 | 0.022 | 0.030 | 0.012 | 0.33 | 0.36 |
| Embodiment 2 | 0.10 | 0.20 | 1.40 | 0.010 | 0.0018 | 0.025 | 0.045 | 0.022 | 0.25 | 0.36 |
| Embodiment 3 | 0.05 | 0.28 | 1.60 | 0.014 | 0.0020 | 0.040 | 0.050 | 0.020 | 0.28 | 0.35 |

**Table 2 Process parameters of rolling and cooling**

| Embodiment | Thickness mm | Final rolling temperature of rough rolling °C | Rolling start temperature of finishing rolling °C | Final rolling temperature °C | Self-tempering temperature °C |
|---|---|---|---|---|---|
| Embodiment 1 | 80 | 1081 | 835 | 826 | 640 |
| Embodiment 2 | 80 | 1073 | 848 | 843 | 580 |
| Embodiment 3 | 80 | 1053 | 827 | 833 | 600 |

The method includes the following processes: hot metal desulfurization pretreatment, converter smelting, LF refining, RH refining, continuous casting, slab inspection and determination, slab acceptance, continuous cast slab heating, descaling, rolling, cooling, flaw detection, cutting and sampling, logo spray marking, and warehousing. Key process points are as follows.

After hot metal desulfurization pretreatment, S is controlled to be less than or equal to 0.005%, P is controlled to be less than or equal to 0.013% by converter smelting, LF refining is carried out for inclusion control and alloy composition adjustment, an oxygen content in an LF furnace is adjusted to an appropriate level using ferrosilicon (Si), and ferrotitanium (Ti), an aluminum (Al) wire, a calcium (Ca) wire and a magnesium (Mg) alloy wire are added strictly in a specified sequence with a time interval of not exceeding 5 min; vacuum treatment of RH refining is kept for more than or equal to 30 min under the condition of high vacuum of less than or equal to 5.0 mbar; a tundish temperature is controlled within a range of 8-22°C above a liquid phase line during continuous casting; and continuous cast slabs are stacked for slow cooling over 48 hours.

A heating temperature of the continuous cast slab is 1150-1250°C, a heating time is 300-400 min, and a tap temperature is 1130-1230°C; rolling employs two-stage rolling in an austenite recrystallization zone and a non-recrystallization zone; during rough rolling, large pass reduction is adopted to refine austenite grains with a pass reduction of more than or equal to 30 mm and a rolling start temperature of rough rolling of higher than or equal to 1050°C, and an intermediate billet with a thickness of more than or equal to 2.0 times a finished product thickness is produced by rough rolling, where a final rolling temperature of the rough rolling is controlled at 900-1050°C, a rolling start temperature of finish rolling is 780-880°C, and the reduction per pass is 10%-15%; and laminar flow cooling for controlled cooling after rolling, with a self-tempering temperature in a range of 600-700°C, followed by air cooling. A high-temperature off-line slow cooling process is as follows: a steel plate after hot straightening is placed on a cooling bed for cooling, with an off-line temperature of 250-500°C and a stack cooling time of 48 h, thereby obtaining 80 mm E40-grade high-strength ship plate steel for high-heat-input welding.

In this embodiment, the heating temperature is 1220°C, the heat preservation time is 140 min, and the tap temperature is 1200°C. During rough rolling, the reduction per pass is 35 mm, and an intermediate billet with a thickness of more than or equal to 2.2 times a finished product thickness is produced by rough rolling, where a rolling start temperature of finishing rolling is 820-850°C, a reduction rate per pass is more than 10%, a final cooling temperature is 650-680°C, an off-line temperature is 440°C, the off-line steel plate is subjected to stack cooling for 48 hours.

**Table 3 Physical performance of Embodiment**

| Sample number | Mechanical property of base metal | | | | Heat input | HAZ performance |
|---|---|---|---|---|---|---|
| | R_{eL}/MPa | Rₘ/MPa | A/% | Akv (-40°C longitudinal)/J | | Akv (-40°C longitudinal)/J |
| 1 | 420 | 530 | 24 | 300 | 150 kJ/cm | 213 |
| | | | | | 250 kJ/cm | 235 |
| 2 | 418 | 541 | 23 | 293 | 150 kJ/cm | 189 |
| | | | | | 250 kJ/cm | 228 |
| 3 | 417 | 544 | 22 | 294 | 150 kJ/cm | 204 |
| | | | | | 250 kJ/cm | 230 |

The steel plate has good comprehensive mechanical property, with a yield strength of more than or equal to 355 MPa and A tensile strength of more than or equal to 470 MPa. It is suitable for the TMCP-state low-cost low-temperature structural steel S355ML with heat input in the range of 50-250 kJ/cm. Under the high-heat-input welding conditions of 50 and 250 kJ/cm, the average impact energy of HAZ of the steel plate at -40°C is above 150J, no heat treatment is required, and the production cost is low.

In addition to the foregoing embodiments, the present disclosure also have other implementations. The technical solutions obtained by equivalent replacement or equivalent transformation shall fall within the scope of protection of the present disclosure.

## Claims

1. TMCP (Thermo-Mechanical control process)-state low-cost low-temperature structural steel for high-heat-input welding, wherein no Nb is added to chemical composition of steel, and the steel comprises the following chemical composition in weight percentage: 0.05%-0.12% of C, 0.15%-0.30% of Si, 1.20%-1.60% of Mn, less than or equal to 0.015% of P, less than or equal to 0.0030% of S, 0.030%-0.040% of V, 0.005%-0.050% of Alt, 0.005%-0.030% of Ti, 0.0005%-0.0040% of Ca, 0.05%-0.40% of Ni, 0.0005%-0.0040% of Mg, 0.32%-0.41% of Ceq, and the rest of Fe and inevitable impurities.

2. The TMCP-state low-cost low-temperature structural steel for high-heat-input welding according to claim 1, wherein the steel comprises the following chemical composition in weight percentage: 0.06%-0.10% of C, 0.16%-0.27% of Si, 1.23%-1.45% of Mn, less than or equal to 0.015% of P, less than or equal to 0.0030% of S, 0.033%-0.045% of V, 0.010%-0.044% of Alt, 0.022%-0.030% of Ti, 0.0015%-0.0032% of Ca, 0.24%-0.27% of Ni, 0.0011%-0.0014% of Mg, 0.35%-0.40% of Ceq, and the rest of Fe and inevitable impurities.

3. The TMCP-state low-cost low-temperature structural steel for high-heat-input welding according to claim 1, wherein the steel comprises the following chemical composition in weight percentage: 0.05%-0.08% of C, 0.25%-0.28% of Si, 1.47%-1.60% of Mn, less than or equal to 0.015% of P, less than or equal to 0.0030% of S, 0.036%-0.050% of V, 0.040%-0.050% of Alt, 0.017%-0.020% of Ti, 0.0026%-0.0033% of Ca, 0.22%-0.28% of Ni, 0.0032%-0.0036% of Mg, 0.35%-0.40% of Ceq, and the rest of Fe and inevitable impurities.

4. A manufacturing method for a TMCP-state low-cost low-temperature structural steel for high-heat-input welding, wherein the method is applied to any one of claims 1 to 3, and comprises the following processes: hot metal desulfurization pretreatment, converter smelting, LF (ladle furnace) refining, RH (Ruhrstahl-Heraeus) refining, continuous casting, slab inspection and determination, slab acceptance, continuous cast slab heating, descaling, rolling, cooling, flaw detection, cutting and sampling, logo spray marking, and warehousing;
after hot metal desulfurization pretreatment, S is controlled to be less than or equal to 0.005%, P is controlled to be less than or equal to 0.013% by converter smelting, LF refining is carried out for inclusion control and alloy composition adjustment, an oxygen content in an LF furnace is adjusted to an appropriate level using ferrosilicon (Si), and ferrotitanium (Ti), an aluminum (Al) wire, a calcium (Ca) wire and a magnesium (Mg) alloy wire are added strictly in a specified sequence with a time interval of not exceeding 5 min; vacuum treatment of RH refining is kept for more than or equal to 30 min under the condition of high vacuum of less than or equal to 5.0 mbar; a tundish temperature is controlled within a range of 8-22°C above a liquid phase line during continuous casting; and continuous cast slabs are stacked for slow cooling over 48 hours;
a heating temperature of the continuous cast slab is 1150-1250°C, a heating time is 300-400 min, and a tap temperature is 1130-1230°C; rolling employs two-stage rolling in an austenite recrystallization zone and a non-recrystallization zone; during rough rolling, large pass reduction is adopted to refine austenite grains with a pass reduction of more than or equal to 30 mm and a rolling start temperature of rough rolling of higher than or equal to 1050°C, and an intermediate billet with a thickness of more than or equal to 2.0 times a finished product thickness is produced by rough rolling, wherein a final rolling temperature of the rough rolling is controlled at 900-1050°C, a rolling start temperature of finish rolling is 780-880°C, and the reduction per pass is 10%-15%; and laminar flow cooling for controlled cooling after rolling, with a self-tempering temperature in a range of 600-700°C, followed by air cooling.

5. The manufacturing method for a TMCP-state low-cost low-temperature structural steel for high-heat-input welding according to claim 4, wherein a 10-80 mm-thick S355ML-grade steel is produced.

6. The manufacturing method for a TMCP-state low-cost low-temperature structural steel for high-heat-input welding according to claim 4, wherein a steel plate has a yield strength of more than or equal to 355 MPa, and a tensile strength of more than or equal to 470-630 MPa, and a suitable weld heat input of 50-250 kJ/cm; under a high-heat-input welding condition, average impact energy of an HAZ (heat-affected zone) of the steel plate at -50°C is above 150 J, and no heat treatment is required when the average impact energy of the HAZ of the steel plate at -50°C is above 27 J.
